# EUROPÄISCHE PATENTSCHRIFT

(11) **EP 3 263 870 B1**
(45) Veröffentlichungstag und Bekanntmachung des Hinweises auf die Patenterteilung: **25.12.2019**
(21) Anmeldenummer: 17171018.9
(22) Anmeldetag: 15.05.2017
(51) Int. Cl.: F02D 9/10, F02D 11/04

(54) **VORRICHTUNG ZUR VERSTELLUNG VON KOMPONENTEN EINER VERBRENNUNGSKRAFTMASCHINE**
DEVICE FOR ADJUSTING THE POSITION OF COMPONENTS OF A COMBUSTION ENGINE
DISPOSITIF DE DÉPLACEMENT DE COMPOSANTS D'UN MOTEUR À COMBUSTION INTERNE

(30) Priorität: 21.06.2016 DE 102016111319
(43) Veröffentlichungstag der Anmeldung: 03.01.2018
(73) Patentinhaber: Pierburg GmbH, 41460 Neuss (DE)
(72) Erfinder: MÜNICH, Marc-Anton, 14476 Potsdam (DE); UHLENDORF, Ringo, 10715 Berlin (DE)
(74) Vertreter: Patentanwälte ter Smitten Eberlein-Van Hoof Rütten Partnerschaftsgesellschaft mbB

(56) Entgegenhaltungen:
- EP-A2- 1 255 036
- DE-A1-102005 052 966
- DE-A1-102012 219 822
- US-A- 2 424 503
- Neil Sclater: "Sixteen Latch, Toggle, and Trigger Devices" In: "Mechanisms and Mechanical Devices Sourcebook Third Edition", 1. Januar 2001 (2001-01-01), McGraw-Hill Companies, Inc., XP055408339, * Seite 213 - Seite 213; Abbildung 1A *

## Beschreibung

Die vorliegende Erfindung betrifft eine Vorrichtung zur Verstellung von Komponenten einer Verbrennungskraftmaschine. Die Vorrichtung umfasst eine elektrische Antriebseinheit, eine Antriebswelle, welche über die elektrische Antriebseinheit drehbar ist, einen Hebel, welcher drehfest mit der Antriebswelle verbunden ist und dessen Drehwinkel in einer ersten Stellung durch einen ersten Anschlag in einer ersten Drehrichtung begrenzt ist und dessen Drehwinkel in einer zweiten Stellung durch einen zweiten Anschlag in einer entgegengesetzten Drehrichtung begrenzt ist, und eine Feder, welche exzentrisch zur Welle mit dem Hebel verbunden ist und über die der Hebel in Abhängigkeit seiner Position entweder in Richtung des ersten Anschlags oder des zweiten Anschlags belastet ist.

Stellvorrichtungen dieser Art dienen zur Verstellung von Schaltklappen zum Öffnen oder Schließen eines Strömungskanals. Die Schaltklappen müssen dabei in zwei definierte Endstellungen fahrbar sein. Beispielsweise bei Auftreten einer pulsierenden Strömung im Strömungskanal ist es erforderlich, dass die Schaltklappe mit Haltekraft in den Endstellungen gehalten wird. Hierzu werden zumeist in einer ersten Endstellung Federn verwendet, während die zweite Endstellung häufig vom Elektromotor gehalten werden muss. Um diesen Stromverbrauch in der einen Endstellung zu reduzieren, wurde in der DE 10 2005 052 966 A1 eine Stellvorrichtung zur Verstellung von Komponenten in einer Verbrennungskraftmaschine vorgeschlagen, die ein bistabiles Federelement umfasst, welches ein schwenkbares Teil der Stellvorrichtung in Richtung zweier durch je einen mechanischen Anschlag definierter Endlagen belastet. In diesen beiden Endlagen ist das schwenkbare Teil energieeffizient zu halten.

Zusätzlich ist aus der EP 1 255 036 A2 eine Vergaserklappe bekannt, an deren Klappenwelle ein Hebel zur Betätigung der Klappe und eine exzentrische Platte befestigt sind. Die exzentrisch zur Welle angeordnete, im Wesentlichen kreisausschnittsförmige Platte, weist an ihrem Außenumfang bis zu drei Ausnehmungen auf, in die ein auf Biegung belasteter Stift in den entsprechenden Stellungen der Klappe greift, der am Gehäuse des Vergasers befestigt ist.

Der Stand der Technik hat den Nachteil, dass lediglich zwei Stellungen energieeffizient gehalten werden können. Beim Einnehmen einer Zwischenstellung ist eine Halteenergie von der Antriebseinheit aufzubringen.

Die Aufgabe der vorliegenden Erfindung liegt somit darin, eine Vorrichtung zur Verstellung von Komponenten einer Verbrennungskraftmaschine zu schaffen, mittels welcher eine Zwischenstellung des Hebels zwischen der ersten und der zweiten Stellung, ohne Halteenergie von außen zuführen zu müssen, gehalten werden kann.

Diese Aufgabe wird durch eine Vorrichtung zur Verstellung von Komponenten einer Verbrennungskraftmaschine mit den Merkmalen des Anspruchs 1 gelöst.

Die erfindungsgemäße Vorrichtung zur Verstellung von Komponenten einer Verbrennungskraftmaschine umfasst eine sich mit der Welle drehende Nocke, welche eine exzentrisch zur Welle ausgebildete Nockenkontur aufweist, die mit einer Rastdruckfeder derart zusammenwirkt, dass die Welle und der Hebel zwischen der ersten Stellung und der zweiten Stellung in einer dritten Stellung verrasten, wobei die dritte Stellung in einer drehmomentenwirkungsneutralen Stellung der Feder ist. Eine Nocke gemäß der vorliegenden Erfindung ist ein konstruktives Element, welches von einer rotationssymmetrischen Form durch eine ausgebildete Nockenkontur abweicht. Die Nockenkontur ist derart ausgebildet, dass die Rastdruckfeder mit der Nockenkontur in einer dritten Stellung verrastet. Der Hebel weist somit zu den beiden Stellungen des Hebels noch eine dritte Stellung auf. Dadurch weist der Hebel eine verbesserte Einstellbarkeit auf. Die dritte Stellung kann ebenso wie die erste Stellung und die zweite Stellung ohne Energieaufwand gehalten werden. Dadurch ist der Energieverbrauch der Vorrichtung verbessert. Unter einer drehmomentenwirkungsneutralen Stellung der Feder wird gemäß der vorliegenden Erfindung verstanden, dass die Kraft, die die Feder auf den Hebel ausübt, in Richtung der Hebelerstreckung in dieser Position verläuft. Der Hebel erfährt somit weder ein Drehmoment in Richtung der ersten Drehrichtung noch ein Drehmoment in Richtung der entgegengesetzten Drehrichtung. In der dritten Stellung ist das Drehmoment des Hebels somit Null. Dadurch ist der Hebel sicher, ohne Zuführen von Halteenergie, in der dritten Stellung haltbar.

In einer bevorzugten Ausgestaltung der Erfindung ist auf der Antriebswelle eine Klappe befestigt, die in einem Strömungsgehäuse drehbar ist. Diese Klappe regelt durch Verstellen die Strömungen in dem Strömungsgehäuse. Durch die dritte Stellung kann die Klappe eine weitere Stellung energieeffizient einnehmen, so dass die Einstellbarkeit der Klappe im Strömungsgehäuse verbessert ist.

In einer bevorzugten Ausführung der Erfindung ist ein erstes Ende der Feder an einem Aufhängepunkt am Hebel befestigt und ein entgegengesetztes zweites Ende der Feder ist am Strömungsgehäuse befestigt. Dadurch kann die Feder ohne Vorsehen weiterer Elemente in der Vorrichtung angeordnet werden.

Vorzugsweise ist die dritte Stellung mittig zwischen der ersten Stellung und der zweiten Stellung angeordnet. Da eine Verschiebung der dritten Stellung generell auch eine Verschiebung des Aufhängepunktes des zweiten Endes der Feder zur Folge hat, führt eine nicht mittige Positionierung der dritten Stellung zu verschiedenen Haltekräften in der ersten und der zweiten Stellung. Somit kann z.B. die Haltekraft der Feder in der ersten Stellung sehr viel höher sein als in der zweiten Stellung. Folglich führt eine mittige Anordnung der dritten Stellung zu gleichen Haltekräften in der ersten und der zweiten Stellung.

Die Feder ist vorzugsweise eine Schraubenfeder. Eine Schraubenfeder ist ein wirtschaftlich herstellbares Bauelement, welches entsprechend der benötigten Federparameter bedarfsgerecht eingesetzt werden kann.

In einer weiteren bevorzugten Ausgestaltung ist das zweite Ende der Feder innerhalb des vom Hebel maximal durchfahrbaren Drehwinkels angeordnet. Aufgrund der Anschläge ist der maximal durchfahrbare Drehwinkel gebildet aus einem sich zwischen der ersten und der zweiten Stellung ergebenden Winkel. Daraus ergibt sich, dass das zweite Ende der Feder innerhalb eines großen Bereiches angeordnet werden kann. Vorteilhafterweise wird jedoch die Position des zweiten Endes in Abhängigkeit zu der dritten Stellung gewählt, so dass die Feder in der dritten Stellung möglichst kein Drehmoment auf den Hebel ausübt, so dass die dritte Stellung sicher gehalten werden kann.

Die Feder ist vorzugsweise eine Druckfeder. Da die Federkraft der Druckfeder sehr hoch gewählt werden kann, ist auch eine zuverlässige Haltekraft in der ersten und der zweiten Stellung ohne zusätzliche Halteenergie sicher gestellt.

In einer bevorzugten Ausführung der Erfindung ist das zweite Ende der Feder innerhalb eines Bereiches angeordnet, welcher zum vom Hebel maximal durchfahrbaren Drehwinkels bezüglich der Wellenachse achssymmetrisch angeordnet ist. Unter einem achssymmetrisch angeordneten Bereich bezüglich der Wellenachse ist zu verstehen, dass dieser Bereich an einer durch die Wellenachse verlaufenden Spiegelachse gespiegelt wurde, so dass eine Verbindungslinie zwischen jedem ursprünglichen Punkt und dem Spiegelpunkt senkrecht zur Spiegelachse ist. Der erfindungsgemäße Bereich ist somit ein gespiegelter Bereich des vom Hebel maximal durchfahrbaren Drehwinkels. Auch hier ergibt sich, dass das zweite Ende der Feder innerhalb eines großen Bereiches angeordnet werden kann.

Die Feder ist vorzugsweise eine Zugfeder. Im Vergleich mit einer Druckfeder hat die Zugfeder den Vorteil, dass die Gefahr eines Knickens der Feder ausgeschlossen ist.

Die Nockenkontur ist in einer bevorzugten Ausführung als Ausnehmung ausgeformt. Die Ausnehmung formt eine konkave Nockenkontur aus. Die Ausnehmung kann beispielsweise als halbmondförmige-Ausnehmung ausgebildet sein. Da ein Kontaktpunkt einer entsprechend ausgeformten Gegenkontur mit der Nocke somit auf einer Symmetrieachse der Rastdruckfeder liegt, wird die Rastdruckfeder in der Regel in einer axialen Richtung der Rastdruckfeder belastet.

Vorzugsweise federt die Rastdruckfeder in die Ausnehmung der Nocke ein. Dadurch bilden die Rastdruckfeder und die Ausnehmung eine formschlüssige Verbindung. Durch diese Verbindung ist der Hebel sicher in der dritten Stellung haltbar.

In einer weiterführenden Ausführungsform weist die Vorrichtung einen Rastkörper, welcher über die Rastdruckfeder in die Ausnehmung der Nocke drückbar ist. Der Rastkörper kann auf einfache Weise mit einer exakten konvexen Gegenkontur zur Nockenkontur ausgebildet werden, so dass der Hebel mit wenig Spiel in der dritten Stellung gehalten werden kann. Zusätzlich wird die Fixierung in der dritten Stellung verbessert. Vorteilhafterweise sind die Anschläge am Strömungsgehäuse ausgebildet. Die Anschläge können dadurch ohne zusätzliche Bauteile vorgesehen werden.

Vorzugsweise sind die Anschläge an einer zur Antriebseinheit entgegengesetzten Seite des Strömungsgehäuses ausgebildet. Dadurch ist es möglich, entsprechend der Platzverhältnisse, die Anschläge auch entfernt zu der Antriebseinheit anzuordnen.

Die erfindungsgemäße Vorrichtung hat somit den Vorteil, dass eine dritte Stellung einstellbar ist, welche ohne Halteenergie von außen zuführen zu müssen gehalten werden kann. Dadurch wird zudem die Einstellbarkeit einer solchen Vorrichtung erhöht.

Weitere Einzelheiten und Vorteile der vorliegenden Erfindung ergeben sich aus der nachfolgenden Beschreibung der Ausführungsbeispiele in Verbindung mit den Zeichnungen. In diesen zeigen:
- Figur 1:: Ansicht einer erfindungsgemäßen Vorrichtung in einer ersten Stellung des Hebels,
- Figur 2:: Ansicht einer erfindungsgemäßen Vorrichtung in einer zweiten Stellung des Hebels,
- Figur 3:: Ansicht einer erfindungsgemäßen Vorrichtung in einer dritten Stellung des Hebels, und
- Figur 4:: Ansicht eines zweiten Ausführungsbeispiels der Erfindung in einer zweiten Stellung des Hebels

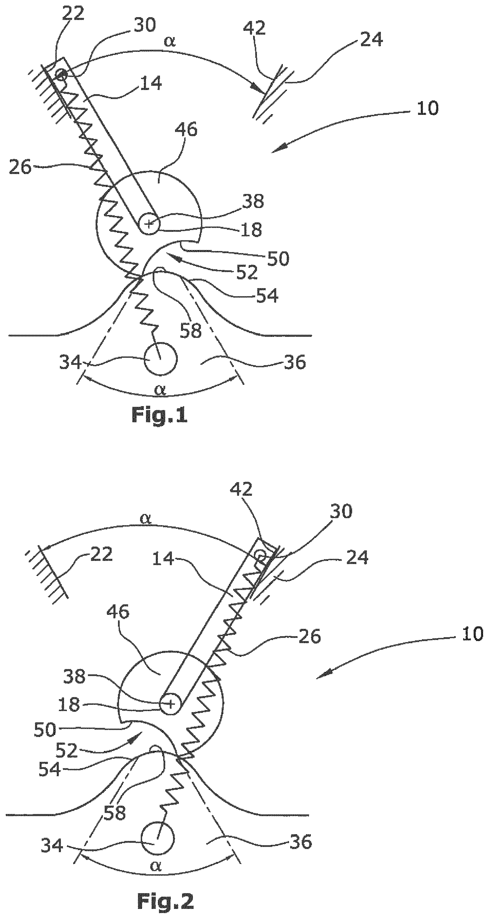

Figur 1 zeigt eine erfindungsgemäße Vorrichtung 10. Die Vorrichtung weist einen Hebel 14 auf, welcher drehfest mit einer Antriebswelle 18 verbunden ist. Die Antriebswelle 18 ist über eine nicht gezeigte elektrische Antriebseinheit antreibbar. In der Figur 1 ist der Hebel 14 in einer ersten Stellung gezeigt. In der ersten Stellung ist der Drehwinkel α des Hebels 14 in einer ersten Drehrichtung durch einen ersten Anschlag 22 begrenzt. Der erste Anschlag 22 ist an einem Strömungsgehäuse 24 ausgebildet.

Ferner weist die Vorrichtung 10 eine als Zugfeder vorgesehene Feder 26 auf. Die Feder 26, die als Schraubenfeder ausgebildet ist, ist exzentrisch zur Antriebswelle 18 an einem Aufhängepunkt 30 am Hebel 14 befestigt. Ein entgegengesetztes zweites Ende 34 der Feder 26 ist am Strömungsgehäuse 24 befestigt. Das zweite Ende 34 der Feder 26 ist innerhalb eines Bereiches 36 angeordnet, welcher zum vom Hebel 14 maximal durchfahrbaren Drehwinkels α bezüglich einer Wellenachse 38 achssymmetrisch angeordnet ist. Die Feder 26 belastet den Hebel 14 in Abhängigkeit seiner Position entweder in Richtung des ersten Anschlages 22 oder eines zweiten Anschlages 42. Die Feder 26 hält den Hebel 14 somit in der ersten Stellung. Um den Hebel 14 aus der ersten Stellung zu bewegen, wird die Antriebswelle 18 über die elektrische Antriebseinheit gedreht.

Die Vorrichtung 10 weist zusätzlich eine Nocke 46 auf, welche sich zusammen mit der Antriebswelle 18 dreht. An einer zur Wellenachse 38 gegenüberliegenden Seite des Hebels 14 weist die Nocke 46 eine Nockenkontur 50 auf, welche in Form einer halbmondförmigen Ausnehmung 52 ausgeformt ist. Die Nocke 46 wirkt mit einer Rastdruckfeder 54 zusammen, welche als Blattfeder ausgebildet ist. Die Rastdruckfeder 54 weist eine Kontur 58 auf, welche eine Positiv-Kontur der Nockenkontur 50 ist.

Figur 2 zeigt die Vorrichtung 10, bei welcher der Hebel 14 in einer zweite Stellung ist. Die zweite Stellung unterscheidet sich von der ersten Stellung des Hebels 14 dadurch, dass eine zur ersten Drehrichtung entgegengesetzte Drehrichtung durch den zweiten Anschlag 42 begrenzt ist.

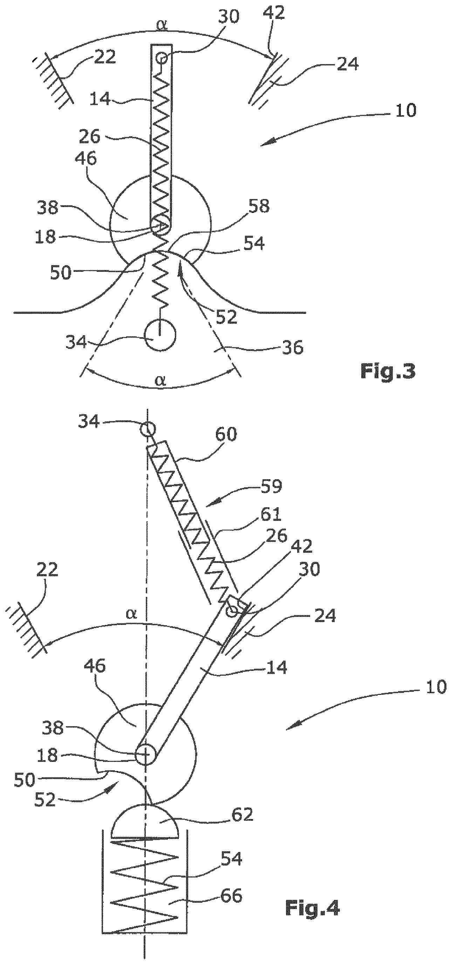

Figur 3 zeigt die Vorrichtung 10, bei welcher der Hebel 14 in einer dritten Stellung ist. Die dritte Stellung ist mittig zwischen der ersten und der zweiten Stellung vorgesehen. In der dritten Stellung ist die Rastdruckfeder 54 mit der Nockenkontur 50 verrastet. Die Rastdruckfeder 54 federt dazu in die Nockenkontur 50 ein. Eine Richtung der Kraft der Feder 26 verläuft in einer Längsrichtung des Hebels 14. Der Hebel 14 ist somit in einer drehmomentenwirkungsneutralen Stellung. Der Hebel 14 kann somit ohne zuführen von Halteenergie in der dritten Stellung gehalten werden.

Figur 4 zeigt ein zweites Ausführungsbeispiel der erfindungsgemäßen Vorrichtung 10, wobei in der folgenden Beschreibung für gleichwirkende Teile gleiche Bezugszeichen verwendet werden. Bei dem in Figur 4 gezeigten Ausführungsbeispiel der Vorrichtung 10 ist der Hebel 14 in einer zweiten Stellung. Das zweite Ausführungsbeispiel unterscheidet sich unter anderem von dem ersten Ausführungsbeispiel dadurch, dass für die Feder 26 anstelle einer Zugfeder eine Druckfeder verwendet wird. Die Feder 26 ist dabei ebenfalls eine Schraubenfeder. Das zweite Ende 34 der Feder 26 ist innerhalb des vom Hebel 14 maximal durchfahrbaren Drehwinkels α am Strömungsgehäuse 24 angeordnet. Um ein Knicken der Feder 26 zu vermeiden ist die Feder 26 zu einem großen Teil in einer als Hohlzylinder geformten Hülse 59 vorgesehen, welche die Feder 26 führt. Die Hülse 59 ist dabei aus einem ersten Hülsenteil 60 und einem auf dem ersten Hülsenteil 60 teleskopartig verschiebbaren zweiten Hülsenteil 61 gebildet.

Die Nocke 46 wirkt mit einem Rastkörper 62 zusammen, welcher über die Rastdruckfeder 54 in Richtung der Nocke 46 gedrückt wird. Die Rastdruckfeder 54, welche als Schraubenfeder ausgebildet ist, und der Rastkörper 62 sind in einer Aussparung 66 vorgesehen. Der Rastkörper 62 weist an einer der Nocke 46 zugewandten Seite eine zur Nockenkontur 50 passende Positiv-Kontur auf. In einer dritten Stellung kann der Rastkörper 62 somit in die Nockenkontur 50 einfedern, so dass der Rastkörper 62 den Hebel 14 in der dritten Stellung verrastet.

Die erfindungsgemäße Vorrichtung ist nicht auf die beschriebenen Ausführungsbeispiele begrenzt. So können die verschiedenen Optionen für die Feder mit der als Blattfeder ausgebildeten Rastdruckfeder oder des Rastkörpers kombiniert werden.

Die erfindungsgemäße Vorrichtung hat den Vorteil, dass eine dritte Stellung einstellbar ist, welche ohne zusätzliche Halteenergie haltbar ist. Dadurch wird zudem die Einstellbarkeit einer solchen Vorrichtung erhöht.

### Bezugszeichenliste

- 10: Vorrichtung
- 14: Hebel
- 18: Antriebswelle
- 22: erster Anschlag
- 24: Strömungsgehäuse
- 26: Feder
- 30: Aufhängepunkt
- 34: zweites Ende
- 36: Bereich
- 38: Wellenachse
- 42: zweiter Anschlag
- 46: Nocke
- 50: Nockenkontur
- 52: Ausnehmung
- 54: Rastdruckfeder
- 58: Kontur
- 59: Hülse
- 60: erstes Hülsenteil
- 61: zweites Hülsenteil
- 62: Rastkörper
- 66: Aussparung
- α: Drehwinkel

## Patentansprüche

1. Vorrichtung (10) zur Verstellung von Komponenten einer Verbrennungskraftmaschine, wobei die Vorrichtung umfasst:
- eine elektrische Antriebseinheit,
- eine Antriebswelle (18), welche über die elektrische Antriebseinheit drehbar ist,
- einen Hebel (14), welcher drehfest mit der Antriebswelle (18) verbunden ist und dessen Drehwinkel (α) in einer ersten Stellung durch einen ersten Anschlag (22) in einer ersten Drehrichtung begrenzt ist und dessen Drehwinkel (a) in einer zweiten Stellung durch einen zweiten Anschlag (42) in einer entgegengesetzten Drehrichtung begrenzt ist, und
- eine Feder (26), welche exzentrisch zur Antriebswelle (18) mit dem Hebel (14) verbunden ist und über die der Hebel (14) in Abhängigkeit seiner Position entweder in Richtung des ersten Anschlags (22) oder des zweiten Anschlags (42) belastet ist,
**gekennzeichnet durch,**
eine sich mit der Antriebswelle (18) drehende Nocke (46), welche eine exzentrisch zur Antriebswelle (18) ausgebildete Nockenkontur (50) aufweist, die mit einer Rastdruckfeder (54) derart zusammenwirkt, dass die Antriebswelle (18) und der Hebel (14) zwischen der ersten Stellung und der zweiten Stellung in einer dritten Stellung verrasten, wobei die dritte Stellung in einer drehmomentenwirkungsneutralen Stellung der Feder (26) ist.

2. Vorrichtung (10) nach Anspruch 1, **dadurch gekennzeichnet, dass** auf der Antriebswelle (18) eine Klappe befestigt ist, die in einem Strömungsgehäuse (24) drehbar ist.

3. Vorrichtung (10) nach Anspruch 2, **dadurch gekennzeichnet, dass** ein erstes Ende der Feder (26) an einem Aufhängepunkt (30) am Hebel (14) befestigt ist und ein entgegengesetztes zweites Ende (34) der Feder (26) am Strömungsgehäuse (24) befestigt ist.

4. Vorrichtung (10) nach einem der vorherigen Ansprüche, **dadurch gekennzeichnet, dass** die dritte Stellung mittig zwischen der ersten Stellung und der zweiten Stellung angeordnet ist.

5. Vorrichtung (10) nach einem der vorherigen Ansprüche, **dadurch gekennzeichnet, dass** die Feder (26) eine Schraubenfeder ist.

6. Vorrichtung (10) nach einem der vorherigen Ansprüche, **dadurch gekennzeichnet, dass** das zweite Ende (34) der Feder (26) innerhalb des vom Hebel (14) maximal durchfahrbaren Drehwinkels (α) angeordnet ist.

7. Vorrichtung (10) nach Anspruch 6, **dadurch gekennzeichnet, dass** die Feder (26) eine Druckfeder ist.

8. Vorrichtung (10) nach einem der Ansprüche 1 bis 5, **dadurch gekennzeichnet, dass** das zweite Ende (34) der Feder (26) innerhalb eines Bereiches (36) angeordnet ist, welcher zum vom Hebel (14) maximal durchfahrbaren Drehwinkel (α) bezüglich der Wellenachse (38) achssymmetrisch angeordnet ist.

9. Vorrichtung (10) nach Anspruch 8, **dadurch gekennzeichnet, dass** die Feder (26) eine Zugfeder ist.

10. Vorrichtung (10) nach einem der vorherigen Ansprüche, **dadurch gekennzeichnet, dass** die Nockenkontur (50) als Ausnehmung (52) ausgeformt ist.

11. Vorrichtung (10) nach Anspruch 10, **dadurch gekennzeichnet, dass** die Rastdruckfeder (54) in die Ausnehmung (52) der Nocke (46) einfedert.

12. Vorrichtung (10) nach Anspruch 10, **gekennzeichnet durch,** einen Rastkörper (62), welcher über die Rastdruckfeder (54) in die Ausnehmung (52) der Nocke (46) drückbar ist.

13. Vorrichtung (10) nach einem der vorherigen Ansprüche, **dadurch gekennzeichnet, dass** die Anschläge (22, 42) am Strömungsgehäuse (24) ausgebildet sind.

14. Vorrichtung (10) nach einem der vorherigen Ansprüche, **dadurch gekennzeichnet, dass** die Anschläge (22, 42) an einer zur Antriebseinheit entgegengesetzten Seite des Strömungsgehäuses (24) ausgebildet sind.

## Claims

1. Device (10) for adjusting the position of components of an internal combustion engine, the device comprising:
- an electric drive unit,
- a drive shaft (18) rotatable via the electric drive unit,
- a lever (14) connected to the drive shaft (18) for rotation therewith and whose angle of rotation (a) is limited in a first direction of rotation at a first position by a first stop (22) and whose angle of rotation (a) is limited in an opposite direction of rotation at a second position by a second stop (42), and
- a spring (26) connected with the lever (14) in a manner eccentric to the drive shaft (18) and via which the lever (14) is loaded, depending on its position either in the direction of the first stop (22) or the second stop (42),
**characterized by**
a cam (46) rotating with the drive shaft (18) and having a cam contour (50) formed eccentrically relative to the drive shaft (18), which cooperates with a latching compression spring (54) such that the drive shaft (18) and the lever (14) engage between the first position and the second position in a third position, wherein the third position is in a torque-neutral position of the spring (26).

2. Device (10) according to claim 1, **characterized in that** a flap is fixed on the drive shaft (18), which flap is rotatable in a flow housing (24).

3. Device (10) according to claim 2, **characterized in that** a first end of the spring (26) is attached to a suspension point (30) on the lever (14) and an opposite second end (34) of the spring (26) is attached on the flow housing (24).

4. Device (10) according to one of the preceding claims, **characterized in that** the third position is arranged centrally between the first position and the second position.

5. Device (10) according to one of the preceding claims, **characterized in that** the spring (26) is a helical spring.

6. Device (10) according to one of the preceding claims, **characterized in that** the second end (34) of the spring (26) is arranged within the maximum angle of rotation (a) traversable by the lever (14).

7. Device (10) according to claim 6, **characterized in that** the spring (26) is a compression spring.

8. Device (10) according to one of claims 1 to 5, **characterized in that** the second end (34) of the spring (26) is arranged within a region (36) which is arranged, relative to the shaft axis (38), axially symmetrical with respect to the maximum angle of rotation (a) traversable by the lever (14).

9. Device (10) according to claim 8, **characterized in that** the spring (26) is a tension spring.

10. Device (10) according to one of the preceding claims, **characterized in that** the cam contour (50) is formed as a recess (52).

11. Device (10) according to claim 10, **characterized in that** the latching compression spring (54) resiliently engages the recess (52) of the cam (46).

12. Device (10) according to claim 10, **characterized by** a latching body (62) adapted to be pressed into the recess (52) of the cam (46) via the latching compression spring (54).

13. Device (10) according to one of the preceding claims, **characterized in that** the stops (22, 42) are formed on the flow housing (24).

14. Device (10) according to one of the preceding claims, **characterized in that** the stops (22, 42) are formed on a side of the flow housing (24) opposite to the drive unit.

## Revendications

1. Dispositif (10) de déplacement de composants d'un moteur à combustion interne, le dispositif comprenant:
- une unité d'entrainement électrique,
- un arbre d'entrainement (18) pouvant tourner par l'intermédiaire de l'unité d'entrainement électrique,
- un levier (14) relié à l'arbre d'entrainement (18) de manière solidaire en rotation et dont l'angle de rotation (a) est limité, dans un premier sens de rotation, dans une première position par une première butée (22) et dont l'angle de rotation (a) est limité, dans un sens de rotation opposé, dans une deuxième position par une deuxième butée (42), et
- un ressort (26) relié avec le levier (14) de manière excentrique par rapport à l'arbre d'entrainement (18) et par lequel le levier (14) est sollicité, dépendant de sa position, soit dans la direction de la première butée (22), soit dans la direction de la seconde butée (42),
**caractérisé par**
une came (46) tournant avec l'arbre d'entrainement (18) et présentant un contour de came (50) formé de manière excentrique par rapport à l'arbre d'entrainement (18), le contour coopérant avec un ressort de compression à verrouillage (54) de telle sorte que l'arbre d'entrainement (18) et le levier (14) se verrouillent dans une troisième position entre la première position et la deuxième position, la troisième position se trouvant dans une position neutre au couple du ressort (26).

2. Dispositif (10) selon la revendication 1, **caractérisé en ce qu'**un clapet est fixé sur l'arbre d'entrainement (18), ledit clapet pouvant tourner dans un boitier d'écoulement (24).

3. Dispositif (10) selon la revendication 2, **caractérisé en ce qu'**une première extrémité du ressort (26) est fixée à un point de suspension (30) sur le levier (14) et une seconde extrémité opposée (34) du ressort (26) est attachée sur le boitier d'écoulement (24).

4. Dispositif (10) selon l'une quelconque des revendications précédentes, **caractérisé en ce que** la troisième position est prévue de manière centrale entre la première position et la deuxième position.

5. Dispositif (10) selon l'une quelconque des revendications précédentes, **caractérisé en ce que** le ressort (26) est un ressort hélicoïdal.

6. Dispositif (10) selon l'une quelconque des revendications précédentes, **caractérisé en ce que** la deuxième extrémité (34) du ressort (26) est disposée dans un angle de rotation maximal (a) traversable par le levier (14).

7. Dispositif (10) selon la revendication 6, **caractérisé en ce que** le ressort (26) est un ressort de compression.

8. Dispositif (10) selon l'une quelconque des revendications 1 à 5, **caractérisé en ce que** la deuxième extrémité (34) du ressort (26) est prévue; par rapport à l'axe de l'arbre (38), dans une zone (36) qui est disposée de manière axisymétrique par rapport à l'angle de rotation maximal (a) traversable par le levier (14).

9. Dispositif (10) selon la revendication 8, **caractérisé en ce que** le ressort (26) est un ressort de traction.

10. Dispositif (10) selon l'une quelconque des revendications précédentes, **caractérisé en ce que** le contour de came (50) est réalisé sous forme d'un évidement (52).

11. Dispositif (10) selon la revendication 10, **caractérisé en ce que** le ressort de compression à verrouillage (54) s'encliquette dans l'évidement (52) de la came (46).

12. Dispositif (10) selon la revendication 10, **caractérisé par** un corps de verrouillage (62) qui peut être pressé par le ressort de compression à verrouillage (54) dans l'évidement (52) de la came (46).

13. Dispositif (10) selon l'une quelconque des revendications précédentes, **caractérisé en ce que** les butées (22, 42) sont formées sur le boitier d'écoulement (24).

14. Dispositif (10) selon l'une quelconque des revendications précédentes, **caractérisé en ce que** les butées (22, 42) sont formées sur un côté opposé au côté de l'unité d'entrainement du boitier d'écoulement (24).
